**Europäisches Patentamt**

(19) **European Patent Office**

**Office européen des brevets**

(11) Publication number: **0 136 085**
**B1**

(12) **EUROPEAN PATENT SPECIFICATION**

(45) Date of publication of patent specification: **08.06.88**

(21) Application number: **84305817.3**

(22) Date of filing: **24.08.84**

(51) Int. Cl.⁴: **G 02 F 1/133,** G 02 B 27/02, H 04 N 13/04, A 61 B 5/16, A 61 F 9/04

(54) **Apparatus for influencing the presentation of visual information.**

(30) Priority: **26.08.83 US 526647**

(43) Date of publication of application:
**03.04.85 Bulletin 85/14**

(45) Publication of the grant of the patent:
**08.06.88 Bulletin 88/23**

(84) Designated Contracting States:
**CH DE FR GB IT LI NL SE**

(56) References cited:
**DE-A-1 812 479**
**DE-A-2 632 483**
**DE-B-2 130 504**
**FR-A-2 132 598**
**US-A-3 737 567**
**US-A-4 021 846**

**ELECTRONIQUE & MICROELECTRONIQUE INDUSTRIELLES, no. 228, November 15, 1976, C. PERROT, "Les cristaux liquides au service de la sécurité routière", pages 39-41**

(73) Proprietor: **Canadian Industrial Innovation Centre**
**156 Colombia Street West**
**Waterloo Ontario N2L 3L3 (CA)**

(72) Inventor: **Canadian Industrial Innovation Centre**
**156 Colombia Street West**
**Waterloo Ontario N2L 3L3 (CA)**

(74) Representative: **Asquith, Anthony**
**Evans, Dodd and Summerton 5 Balfour Place Mount Street**
**London W1Y 5RG (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a device for influencing the visual information presented to at least one eye of at least one observer, whereby a shutter apparatus is placed between the observer's eye and the source of the visual information. Each shutter apparatus comprises one or more liquid crystal cells, each of which comprises a layer of liquid crystal material surrounded by two parallel plates of glass, the surfaces of which are coated with a transparent conductive film. By introducing an electrical voltage between each pair of plates the light transmission characteristics of each cell can be regulated.

Such an optical device is known from US—A—4,021,846. That device has as its objective that an observer perceive in three dimensions images generated by a visual display device, by means of synchronizing the operation of the shutter apparatus with alternately presented display images, such that each of the observer's eyes receives information intended for that eye only. The liquid crystal cells in that apparatus are constructed by sandwiching a layer of nematic liquid crystal material between two parallel plates of glass. The surfaces of the plates which are in contact with the liquid crystal material are coated with a transparent conductive film, thus allowing the plates to serve as electrodes, across which an electric field can be applied. The liquid crystal cells used in that invention have the property that the plane of polarization of incident polarized light can be continuously rotated from 0 to 90 degrees, depending on the magnitude of the voltage imposed across the electrodes. The liquid crystal cells are placed between crossed polarizers in order to cause the transmission of light through the cell to vary between a minimum and a maximum value, in conjunction with the imposed steering voltage. When suitable images intended for alternate presentation to an observer's eyes are presented on a suitable display device, an appropriate steering signal can be sent to the liquid crystal apparatuses to ensure that each of the alternating displayed images is presented only to the appropriate eye of the observer, in order thus to allow the observer to perceive depth in the resulting composite image. Such images can be, for example, images whose composition is determined by display elements generated by a measuring or computing device, or pictorial images which are produced on a display device such as a television receiver. In all cases, in order to achieve a continuous three dimensional representation, the alternating picture elements must each be presented from a geometrical side-by-side perspective appropriate to the perspective intended to be viewed by the corresponding eye of the observer.

One disadvantage of such a stereoscopic viewing device is that not all wavelengths of incident light are equally affected, resulting in an unsatisfactory reproduction of colour images. In addition, the polarizing filters absorb an appreciable amount of the incident light, which reduces the perceived intensity of the entire visual environment, including the presented display image. Yet another disadvantage is that the switching times between the light and dark states for this device are relatively large, thus necessitating the simultaneous blanking of the images intended for both eyes for an appreciable amount of time during part of the presentation cycle in order to prevent either eye from receiving any information intended for the opposite eye. Consequently, for the high rates of presentation of display images necessary for the perception of continuously fused images, the proportion of time during which both eyes receive no information is relatively large. This can result in a disturbing flickering effect, which is very fatiguing for the eyes of the observer. Another consequence is a reduction in the upper limit on the speed of continuous perceived motion of the three dimensional images which one is able to display.

There do, however, exist liquid crystal cells (cf. US—A—3650603) which may be switched more rapidly and which are also able to influence the transmission of incident light without necessitating the use of polarizing filters with their accompanying disadvantages. Such liquid crystal cells are able, depending on the presence of an appropriate applied electric field, either to scatter incident light or to transmit the light relatively undisturbed. The fact that such scattering liquid crystal cells can not be switched to a dark opaque state has in general acted as an obstacle towards their utilization for such practical applications as liquid crystal display devices.

The shuttering device of this invention is specified in claim 1.

The liquid crystal shutter apparatus of this invention is based on the realization that, for applications wherein visual information is repeatedly prevented from arriving at an observer's eyes, it is not a disadvantage that such a shutter device does not become dark but rather an advantage, because during the intervals between consecutive presentations of external visual information the observer's eye is illuminated by an appreciable portion of the incident light scattered by the liquid crystal cell itself. The result is that when the liquid crystal cell is switched between states the illumination of the eye fluctuates much less than it would if the liquid crystal cell were to become dark, such as occurs with liquid crystal cells which operate with polarizing filters. Whereas repeated switching between the transparent and opaque, that is, between light and dark, states can have a fatiguing effect upon the eye, this fatigue is much diminished if the switching is done between the transparent and scattering states since the eye does not have to adapt as much to the incident light of the transparent state.

In general there are two principal means by which liquid crystal materials can be switched, under control of an imposed electric field, between the transparent and the scattering states. One way to achieve this effect is by disturbing the order of the liquid crystal molecules with the electric field. This mode of scattering light is called the dynamic scattering mode and it can be achieved with nematic liquid crystals as well as, in an analogous fashion, with cholesteric liquid crystals. This mode is characterized by a scattering ON-state which is obtained during the imposition of an appropriate electric field, and a transparent OFF-state which is reached after removal of the electric field. The ON-OFF (scattering-transparent) transition is caused by the gradual reorientation of the liquid crystal molecules, due to electrode surface forces, and can sometimes be accelerated by applying an appropriate alternating electric field. Three optical liquid crystal devices which employ this dynamic scattering mode of switching are known from West German Patent Publication DE—A—2,111,067, French Patent Publication FR—A—2,132,598 and from a report by C. Perrot published in Electronique and Microelectronique, No. 228, 15 Nov. 1976, pp. 39—41. All of these devices are characterized by a transparent OFF-state and a scattering ON-state.

The present invention is based on the second manner of switching liquid crystals between the transparent and scattering states and can be realized with so-called cholesteric liquid crystals, which are normally produced by adding a small amount of cholesteric material to a nematic liquid crystal. Instead of disturbing the order of the liquid crystal molecules with an electric field in order to scatter incident light, as in dynamic scattering, the present liquid crystals are able to scatter light in their natural OFF-state. On the other hand, whenever an appropriate and sufficiently large alternating electric field is applied across the electrodes, the natural helical orientation of the liquid crystal molecules becomes unwound and a transparent ON-state results. The transition between the scattering and transparent states with such mixtures is known as the cholesteric-nematic phase change effect.

The present invention is based on the various advantages of employing the cholesteric-nematic phase change effect, as compared to the switching characteristics of the other optical liquid crystal devices which have been mentioned.

One advantage is that the transition of cholesteric liquid crystals from the (scattering) OFF-state to the (transparent) ON-state occurs at a critical value of the electric field and not at a crictal threshold voltage. This critical field value can be varied over a wide range, wherein it can be raised by increasing the concentration of cholesteric in the liquid crystal mixture or by decreasing the separation of the electrode plates. Since a higher threshold field implies a faster switching time, very short turn-ON times can be achieved with cholesteric liquid crystals as compared with other liquid crystals.

Another advantage is that the transition from the (transparent) ON-state to the (scattering) OFF-state is not a gradual and uniform transition which is determined by electrode surface forces, as is the case with other liquid crystals. The nematic-cholesteric transition is a direct function rather of the optical activity of the liquid crystal molecules and, due to the fact that cholesteric liquid crystals are among the most optically active substances known, it is possible to obtain much shorter turn-OFF times as compared with other types of liquid crystals.

Summarizing these two advantages, liquid crystal devices whose operation is based on the cholesteric-nematic phase change effect can be constructed to achieve speeds of switching back and forth between the ON and OFF states which are much faster than can be achieved with either dynamic scattering liquid crystal devices or with liquid crystal devices which rely on crossed polarizers.

A third advantage of liquid crystal devices employing the cholesteric-nematic phase change effect with respect to the other liquid crystal devices which are also capable of scattering incident light concerns the relationship between the imposition and removal of the electric field and the corresponding transparent and scattering states of the devices. For all of these devices the switching times accompanying the imposition of an electric field are shorter than the switching times which result from the molecular relaxation processes which commence subsequent to the removal of the electric field. In order to present visual information to an observer at controlled instants in time and for very short periods of time, it is important that this information be made to appear quickly and without distortion. This requirement can therefore be fulfilled more satisfactorily with a device which quickly switches from scattering (OFF) to transparent (ON) with the imposition of an electric field than with a device which operates conversely. Furthermore, whenever visual information is to be removed from an observer's view, the transition time from transparent to total scattering is less critical than for the complementary transition from scattering to transparent, because whenever information is to be removed, the information will become occulted from the observer's eye relatively soon after the scattering of incident light commences and much before completion of the full transition to the maximum degree of scattering.

To summarize, both the ON-OFF and OFF-ON switching characteristics of liquid crystal optical devices which employ the cholesteric-nematic phase change effect are consequently superior to those of other light scattering liquid crystal devices for purposes of tachistoscopic, i.e. very brief, presentation of visual information.

It is recognised in the invention therefore that a number of the problems that are associated with the prior art polarising liquid crystal devices, of the kind shown in US—A—4021846, can be alleviated by the use of the cholesteric-nematic phase change effect. US—A—3650603, 21 March 1972 is an example of the prior art relating to the cholesteric-nematic phase change effect.

US—A—4021846 shows a shuttering device, which is electronically operable between a clear-viewing condition, in which the passage of visual information through the device to a person's eye is allowed, and a non-viewing condition, in which the passage of visual information through the device to the person's eye is blocked.

The shuttering device in US—A—4021846 includes a frame that is suitable for being worn on the face of the person.

The shuttering device of US—A—4021846 comprises a cell, which is so mounted in the frame as to be located directly in front of the eye of the person; the cell comprises two glass plates and a thin layer of liquid crystal sandwiched between the two glass plates; and the cell also comprises a means for applying an electrical field of an intensity greater than a critical value, across the thickness of the layer of liquid crystal.

US—A—3650603 shows a liquid crystal material of the kind that undergoes the cholesteric-nematic phase change effect. By application of an electrical field of an intensity greater than a critical value, the liquid is rendered transparent. By reduction of the field below the critical value, the liquid crystal is made to acquire a light scattering texture.

By utilising the liquid crystal that undergoes the cholestric nematic phase change effect in the shuttering device, the device is able, when the electrical field is below the critical value, to blank the visual information without rendering the field of view dark.

As compared with the shuttering device that is based on the polarisation of light, the shuttering device of the invention maintains a more even level of illumination of the eye, which minimises eye fatigue.

As compared with the shuttering device that is based on the polarisation of light, the shuttering device of the invention is able to transmit colours with comparatively little distortion, and with comparatively little loss of intensity.

As compared with the shuttering device that is based on the polarisation of light, the shuttering device of the invention can operate with comparatively much shorter switching times between the image-transmitting and the image-obscuring states.

As compared with the shuttering device that is based on the polarisation of light, it is comparatively simple in the shuttering device of the invention to obscure only a selected part of the visual field.

As compared with the shuttering device that is based on the polarisation of light, the shuttering device of the invention can be light and comfortable, when in the form of spectacles.

As compared with the shuttering device that is based on the polarisation of light, the shuttering device of the invention uses comparatively less electrical energy in its operation, which can be a critical factor in allowing the device to be battery powered, and portable.

As compared with the shuttering device that is based on the polarisation of light, the shuttering device of the invention allows stroboscopic presentation independently to each eye of visual information from their visual field of each eye.

As compared with the shuttering device that is based on the polarisation of light, the shuttering device of the invention allows tachistoscopic presentation independently to each eye of visual information from the visual field of each eye.

As compared with the shuttering device that is based on the polarisation of light, the shuttering device of the invention, in combination with suitable electronic signal circuitry, and with suitable apparatus which is able alternately to generate or reproduce display images which geometrically correspond to images to be presented alternately to the left eye and the right eye of the observer, enables the perception by the observer of a composite stereoscopic representation of (moving) display images with a minimum of perceptible flicker and with little distortion of the colour content of the display images.

The invention is characterized by the use of liquid crystal cells containing an appropriate cholesteric liquid crystal compound, which, depending on an imposed alternating electric field and by means of the cholesteric-nematic phase change effect, are able either to scatter incident light or to allow it to be transmitted essentially unhindered. The transparent and scattering states of these cells correspond, respectively, to the ON and the OFF states of the electric field imposed across the cells.

An advantage of using this type of liquid crystal cell as an optical device is that during its operation the wavelengths of incident light are not affected, thus enabling undistorted observation of coloured images. In addition, no polarizing filters are necessary, which would otherwise lead to an appreciable attenuation of the intensity of incident light. Furthermore, due to the relatively very fast switching times attainable with this type of liquid crystal cell, a broad range of objectives can be achieved.

A considerable saving in the amount of energy consumed by the device can be achieved by constructing the driving voltage circuitry such that during the turn-on phase an electric field which is appreciably larger than the critical electric field necessary for switching the cell is imposed across the cell and after the turn-on phase has been completed the electric field is reduced to a lower value which is closer to but nevertheless still greater than the critical value for maintaining the transparent state. By maintaining this lower field for the remainder of the transparent phase, large savings in energy can be achieved, while preserving the advantages of rapid switching from scattering to transparent. This energy saving can be very useful for portable, battery-operated realizations of the invention.

Whenever a particular liquid crystal cell does not efficiently scatter incident light in its OFF-state, such as during conditions of insufficient ambient illumination, it may be desireable to align two or more liquid crystal cells with their surfaces contiguous, thus allowing them to operate cumulatively in the scattering phase.

One advantage of using liquid crystals to implement an electronically controlled apparatus for influencing the presentation of visual information is the ability to subdivide the electrode surfaces of liquid crystal cells into separate segments such that each segment of a subdivided cell may be independently activated. When implemented in a device such as the present invention the consequent ability to present or occult information from different sections of the observer's visual field indepedently can be useful for perceptual and cognitive psychological research. This ability to subdivide electrode surfaces is common to all liquid crystal cells; however, one advantage of using light scattering liquid crystals, as in the present device, is that the perception of any particular segment of the visual field will not be greatly disturbed due to the sharp gradients in light intensity if an adjacent segment has been occulted. Furthermore, by employing cholesteric liquid crystals which can be switched by means of the cholesteric-nematic phase change effect, individual segments of the liquid crystal cells can be switched on and off very rapidly. A practical advantage of such large switching speeds is that a relatively large number of independent segments of a single cell, arrange in an orderly fashion such as a matrix pattern, can be switched by means of conventional multiplexing methods, rather than by having to make separate electrical connections to each of these cell segments.

Another application of the present invention is as a device for stroboscopic presentation of visual information, where, by placing liquid crystal cells, mounted for example on a spectacle frame, before one or both of an observer's eyes and by repeatedly switching the device to its transparent state for short periods of time, the same effect can be achieved as would be had with the conventional stroboscopic technique of synchronously illuminating a recurring image or rotating object together with its visual surround by means of repeated flashes of light. The advantage of the present invention is that neither the user of the invention, implemented as a stroboscopic viewer, nor other people who may be present will be disturbed by potentially bothersome and/or fatiguing flashes of light. In addition to this, it is possible to have several people who are present in the same visual environment and equipped with similar devices independently stroboscopically observe a number of different periodically recurring images without influencing each other's observations.

Yet another application of the present invention is as a tachistoscope, that is, a device commonly used in perceptual research, whereby visual images can be presented to one or both eyes, or to portions of the visual fields of the eyes, of one or more experimental subjects for very short periods of time. The experimental subjects are no longer constrained to looking into an enclosed container but, due to the portable nature of the invention when mounted on a spectacle frame and worn by the subjects, and especially if implemented without wires connecting the device to a signal generator, are now free to walk about unhindered and may thus be presented with a much broader range of both stationary and moving visual information, without influencing the colour content of those images. For circumstances in which insufficient scattering of light is attained in the cells' OFF-state, two or more liquid crystal cells can be mounted parallel to each other in front of both eyes and can be operated as a composite shutter device with no losses in speed of switching. Because of these properties, the electro-optic shutter devices according to the invention have a broad range of applications in different areas of, but not limited to, education and natural, medical and behavioural sciences.

Two liquid crystal shutter devices of the present invention can be combined and mounted on the left and right sides of a single spectacle frame to form an apparatus whose driving voltage source can be made such that each of the component devices can be switched either simultaneously or independently at different moments in time, especially in an alternating fashion, between its transparent and scattering states. Such a spectacle-mounted apparatus can be used for stereoscopic viewing, by means of presenting the wearer with appropriate temporally alternating images on a visual display device while synchronizing the switching of each of the shutter devices such that the left eye device is in its transparent state and the right eye device in its scattering state whenver the image intended for the left eye is displayed and the right eye device is in its transparent state and the left eye device in its scattering state whenever the image intended for the right eye is displayed. The high switching speeds which are achievable ensure that efficient use may be made of the time available for presenting the display images, without having to blank both left and right eye information simultaneously. In order to compensate for the slightly longer times necessary to switch such liquid crystal cells from the transparent (ON) to the scattering (OFF) states, it is possible to construct the switching circuitry such that the signal commanding a particular cell to switch off arrives slightly before the cycle time for the corresponding display image has been completed.

Whenever a similar stereoscopic viewing apparatus, the accompanying image display apparatus and the synchronizing signal generating apparatus can be implemented such that successive left eye and right eye information can be presented to an observer at a faster rate than would otherwise be attainable, the composite three dimensional image will be perceived with reduced flicker and thus with less concomitant visual fatigue, but with no loss in the quality of the colour of the perceived images. The high switching speeds which are achievable with the present device enable the attainment of this object in a number of ways. When used in conjunction with devices on which the displayed images are either continuously produced or are rapidly generated by means of their individual vector elements, the present liquid crystal stereoscopic viewing device can be switched between the left and right eyes as quickly as the completed left and right eye images can be successively presented. The switching frequency of such a system will be constrained by the limits of the display apparatus, the stereoscopic viewer and perceptual capabilities of the observer.

When used in conjunction with display devices, such as conventional television receivers, which generate images by means of raster scanning, the left and right eye images can be made to correspond to successive complete raster scanning cycles, or frames. The great advantage of such an implementation is that stereoscopic image perception may be achieved with no internal modifications necessary to the display production apparatus. Display information for such a display device may be generated by one or more data processing or computing devices or it may be obtained via two geometrically compatible transduction devices, such as conventional television cameras, whose outputs are alternately switched electronically and then combined to form a single information carrying signal. Conventional signal recording, storing and playback devices can therefore be used in this application, with no modifications necessary. It is nevertheless possible to modify such display production apparatuses by increasing the frame cycle rate of the input, recording, playback and display image production devices. Due to the high switching speeds achievable with the present invention, the left and right eye shutters can still be synchronized with such rapidly alternating frames and a three dimensional image with reduced flicker will be obtained. It is further possible to retain the conventional raster frame frequency but to multiply by an odd integral factor the rate at which left and right eye information is switched as the input of the display information generation or transduction stage. Instead of the conventional correspondence between one frame and a complete left or right eye image, fractional portions, or bands, of these images will now be successively presented on the display device during each raster frame cycle. Due to the high switching speeds achievable with the present invention, the left and right eye shutters can be synchronized with such rapidly alternating corresponding left and right eye fractional frame portions, resulting in a single composite image with reduced flicker.

The preferred and alternative embodiments of the invention will now be described with reference to the accompanying drawings.

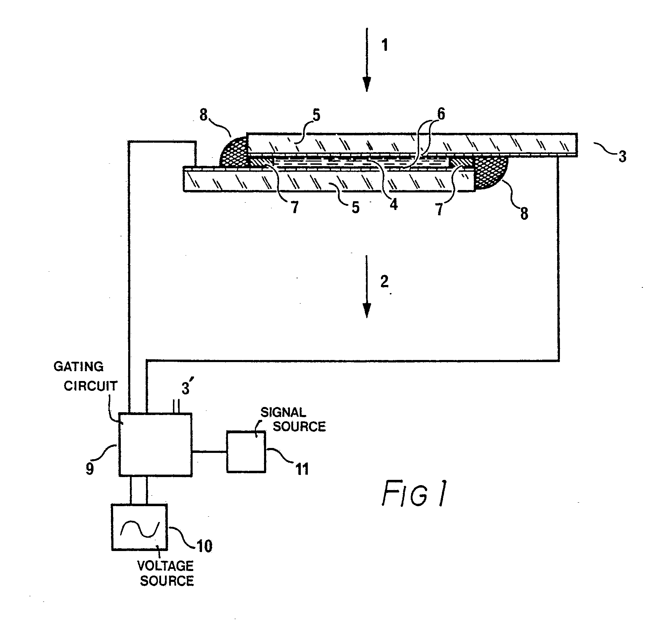

Figure 1 is a schematic cross-section of a device according to the present invention, including a schematic block diagram of an accompanying electrical power and switching circuit;

Figure 2 is a frontal view showing a device of the invention positioned in front of the eyes of a viewing person; and

Figure 3 is a cross-section of a device of the invention which incorporates two cells arranged contiguously.

The device shown serves to influence a beam of light 1 originating from a light source, while the transmitted light 2 is intended for one or both eyes of an observer.

A shutter device 3 which serves to influence the incident light is constructed from a thin layer 4 of a cholesteric liquid crystal enclosed between two glass plates 5, each of which is coated on the side adjacent to the layer 4 of liquid crystal with a transparent electrically conductive layer 6. The desired distance between the glass plates 5 is maintained by a separator 7, while a sealing material 8 is used to seal the area enclosed between the plates. The portions of the electrical coating 6 on the glass plates 5 which extend beyond the opposite glass plate can be used to make external electrical connections.

The cholesteric liquid crystal mixture is of the type which, depending on the electric field imposed across the conductive electrode coatings 6, can be made to exhibit either a clear, transparent texture or a cloudy, scattering texture. To accomplish this the electrodes 6 are connected via a gating circuit 9 to an alternating voltage source 10 with an appropriate frequency, of approximately 1 KHz or more for example. The amplitude and frequency of the imposed alternating voltage are chosen, depending on the composition of the cholesteric liquid crystal mixture and on the thickness of the cell, to exceed a required critical electric field and thus to achieve rapid switching between the scattering and transparent states. The mode by which the liquid crystal changes states between scattering and transparent is the so-called cholesteric-nematic phase change effect. This transformation is characterized, for a particular cell, by a transparent state whenever the electric field is raised above a critical value, corresponding to the ON-state, and a light scattering state whenever the electric field is lowered below the critical value, corresponding to the OFF-state.

Whenever there is a need for more scattering of light in the OFF state, two or more liquid crystal cells can be placed contiguously.

The gating circuit 9 is driven by a signal source 11 that produces suitable driving signals. In the drawing the gating circuit 9 has two sets of outputs, wherein one set of output is connected, as shown, to the electrodes 6 of the device 3, while the other set of outputs is connected to the corresponding electrodes of a similar device 3', which is not shown in the drawing. The two devices 3 and 3' are meant to be placed before each of the eyes of an observer. It is also possible for each of these devices to be connected to separate gating circuits and voltage sources. Depending on the purpose for which such devices are intended, the two devices 3 and 3' can be driven in phase or out of phase with each other, and it is also clearly possible to drive such devices completely independently of each other.

Two such shutter devices can be mounted on a spectacle frame, wherein each shutter device is placed in front of one of an observer's eyes. In such a configuration the visual information presented to each eye can be independently controlled. In some cases it can be sufficient to place a single device 3 in front of both eyes, while in other cases it can be desireable to place such a device between the observer and a source of visual information, for example, in the form of an advancing mechanism in front of the lens of a slide or film projector.

In order to allow the three dimensional perception of a displayed visual image, separate shutter devices 3 and 3' are placed before each eye of an observer and each shutter device is alternately switched in counter-phase at a cyclic frequency that is synchronized with the cyclic frequency at which a pair of appropriate display images are alternately presented, whereby each display image is intended for presentation to only one eye of the observer. Two advantages of this apparatus, as compared to the previously known shutter devices which use polarizing filters, are that there is no decrease in light transmission due to the use of polarizing filters and that there is also no distortion in the colour content of the displayed images, since the present liquid crystal in its transparent state does not alter the wavelengths of incident light.

The device used to present the display images can be a raster scanning device, such as a television screen, wherein successive raster scaning frames correspond to the alternating images intended for the two eyes. It is also possible to create images on a different type of display device by rapidly generating the individual vector elements of such images, where the display information is defined by an accompanying computing machine. By quickly computing and generating successive geometrically compatible side-by-side images and synchronizing the liquid crystal shutters accordingly, three dimensional images can be perceived. These images may be, for example, three dimensional computer-generated animated images or perspective displays of multidimensional functional relationships, such as may usefully be displayed for flight guidance information for aircraft. A further refinement which is possible with such display systems is interactive viewpoint dependent imaging, whereby the stereoscopic image perspective can be continuously translated and/or rotated in response to the changing viewpoint of the observer.

It is also possible to display information continuously as the displayed output of paired measuring or spatial information transmission devices or of light transmission devices, such as optical fibres. When such continuous side-by-side images are alternately projected or otherwise presented on a single display device, the present stereoscopic viewing device can be synchronized to render to the viewer a single three dimensional image. Whenever the continuous display images are alternately projected and mixed into a single display, such as might be done with optical fibres, the present shutter devices may be used for the purpose of alternately transmitting and blanking the display images as well.

Because the switching times from transparent to scattering and from scattering to transparent are very short, especially as compared to both the previously known nematic liquid crystal shutter devices and the previously known shutter devices which make use of dynamic scattering, each of the left and right eye displayed images can be viewed by the corresponding eye for essentially the full duration of the cycle in which it is presented, or, in other words, there is essentially no time, as with other devices, during which both left and right eye information must be blanked simultaneously. Furthermore, during the period in which a particular eye is occluded from the displayed information, because it remains illuminated by scattered light the eye can adapt more easily to the increased illumination when display information is again presented than it would have been able to if the shutter had been dark when closed, as the case with the known devices use polarizing filters. The ability with the present invention of the eye to adapt quickly is a very important factor in reducing the visual fatigue of the observer.

Because of the high switching speeds it is possible to modify some types of recording, playback and display equipment to operate with a higher raster frequency, in order to provide more rapidly alternating image frames to each eye and thus to reduce flicker effects. This same advantage can be achieved with those continuous and vector generating display devices which are capable of producing complete left and right eye images very rapidly. It is also possible to transduce or record the information in such a way that each eye is presented with only a portion of a raster scanning frame, in the form of horizontal bands for example, where the shutter for each eye is synchronized with the appropriate frame portion. The net increase in display presentation rate will act thus to reduce flicker effects.

An appreciable saving in energy can be obtained by constructing the switching circuit such that, after applying the large, but not unlimited, supracritical electric field necessary for rapid switching from the scattering state to the transparent state, the electric field is reduced for the remainder of the transparent state cycle to a value which is still above but closer to the critical value and which is able to maintain the transparent state. This energy saving can be especially advantageous if the spectacle mounted apparatus is to be operated with a portable, battery operated power supply.

The electrodes of such liquid crystal shutter devices can furthermore be subdivided into separately addressable segments, for example in the form of bands or rings or in matrix form, by means of which it is possible independently to occult visual information from or present information in different parts of the visual field of an observer. This can be useful for certain types of perceptual research, such as for mapping the functional visual field or for performing experiments on attention behaviour. With such subdivided electrodes the electric field applied to each segment can be adjusted such that each segment can be switched between transparent and scattering without affecting the neighbouring segments. It is possible, for a limited number of such segments and for certain types of patterns, to make direct electrical contact with each of the electrode segments, which may or may not have sections of electrode on the opposite plate which are common to more than one segment, and thus drive them directly. Because of the high switching speeds associated with the cholesteric-nematic phase change effect, it is also possible to operate matrix patterns with a much larger number of segments, by dividing each electrode into strips and placing the two plates such that the strips are oriented along opposite axes and then by making use of conventional methods of multiplexed addressing and driving.

A special application of the liquid crystal viewing device, furthermore, is its use for stroboscopic observation of rapidly recurring phenomena, such as with the motion of machine parts. For that purpose the most common method has been to use a special lamp which is able to produce very short and repetitive light flashes at controlled instants in time. Such flashes of light, however, can have a disturbing effect, both on the observer and also on others present in the vicinity. A viewing device such as the present device, when mounted on a spectacle frame and worn by an observer, can instead be used, whereby the short switching times and the transparent ON-state and scattering OFF-state permit periodic observations which are sufficiently sharp and well defined for most applications. By this method several different people in the same room can make stroboscopic observations of the same or different objects, completely independently of each other and without disturbing each other.

Another application of such a portable stroboscopic viewer is the ability continuously to adjust the frequency and duty cycle of switching of the liquid crystal cells or segments of cells and to have the wearer indicate the frequency at which flickering either is no longer perceived or reappears. The wearer in this case can be, for example, a worker or an experimental subject who may simultaneously be executing another assigned task. The so-called critical fusion frequency which is measured is often employed by ergonomists to rate the difficulty of an assigned task or the workload imposed on the operator performing that task.

A special application of the device according to the invention is as a tachistoscope, for perceptual research. With such a device one or both eyes of an experimental subject are presented separately or simultaneously with static or moving images for very short regulated periods of time. With conventional tachistoscopes the experimental subject must look into an enclosed container, which is a rather unnatural manner of presenting information, because the subject's visual field is limited and isolated from the actual surroundings and because the subject must remain more or less motionless. Whenever, however, the subject is able to wear spectacles comprising the shutter devices of the present invention, then his freedom of motion will be unhindered and the visual environment encompassing any presented target information can also be observed. The visual environment itself can furthermore comprise the intended target information, thus enabling tachistoscopic experiments in completely natural environments, such as in a moving automobile, which was not possible with conventional tachistoscopes. Such experiments can be valuable, for example, for investigating psycho-motor coordination, as well as for experiments and training in physical education, sports and sports medicine. Target information can also be presented to subjects on a television screen or a projection screen whereby if necessary the projectors used can also be equipped with shutter devices according to the invention. The power supply for a spectacle device on which the present shutter devices are mounted can be made portable, in order to increase the freedom of movement of experimental subjects, whereby the energy saving circuitry described earlier can also be very advantageous. If desired, such a portable apparatus can also be equipped with a facility for wireless transmission of the synchronizing and switching signals. Whenever the liquid crystal cells are subdivided into separately addressable segments, it also becomes possible to switch corresponding sections of the visual field on and off accordingly. The high switching speeds and non-distortion of colour are also important advantages here.

Devices according to the invention are useful, moreover, anywhere that similar or comparable conditions of presenting visual information exist and/or whenever high switching speeds, light scattering, a transparent ON-state and a light-scattering OFF-state, colour fidelity and the other properties of the present cholesteric-nematic phase change effect liquid crystals can be used to advantage, especially in eduction and in the natural, medical and behavioural sciences.

The following may be regarded as a non-restricting example of measured properties of one satisfactorily performing implementation of the present device:

Composition of liquid crystal: 15% cholesteric CB15 85% nematic E18.

(The above designations are those assigned by the suppliers of the liquid crystals, BDH Ltd, of Broom Road, Poole, BH12 4NN, England)

Thickness of liquid crystal layer: 12 micrometres.

Voltage for switching to the transparent state: 100 V rms.

Voltage 4 ms after switching to transparent state: 60 V rms.

Carrier frequency of driving voltage: 1 kHz.

Time to switch fully to transparent (ON) state: less than 1 ms.

Time to switch fully to scattering (OFF) state: 3 to 5 ms.

From this table it is apparent that the switching time to the transparent state is much shorter than the opposite switching time to the full scattering state. The electronic circuitry for such a device should therefore be constructed such that the turn-off gating signal should be sent, if necessary, at an appropriate earlier instant in time, to be defined by a compromise between this switching time delay on the one hand and the practical perceptual effect of incomplete scattering on the other, in order to ensure that the actual moment at which visual information is effectively occulted occurs at the correct desired moment in time.

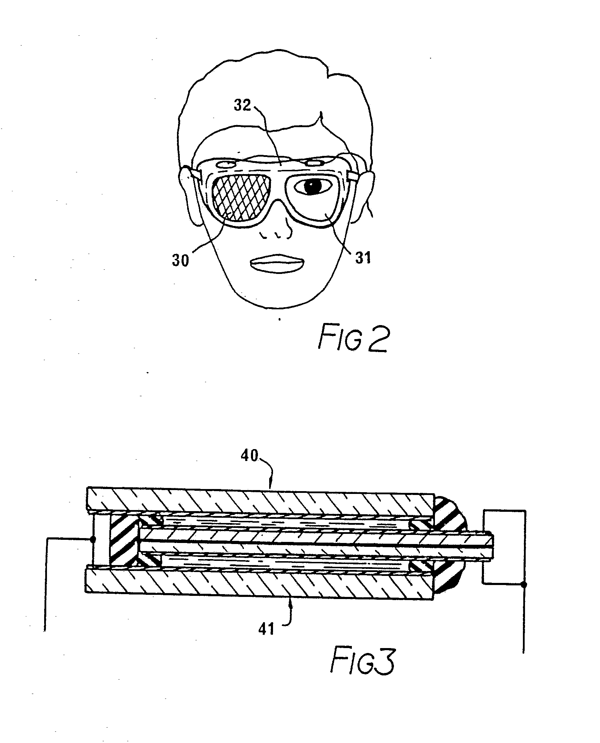

Figure 2 shows left and right 30, 31 cells arranged in front of the left and right eyes respectively of a person. The cells 30, 31 are disposed in the manner of lenses in a spectacle frame 32.

The left cell 30 is in the non-viewing condition, in which the left eye sees merely a blur of scattered light. The right cell 31 is in the clear-viewing condition, in which the right eye clearly sees whatever is to be seen through the cell.

In this specification "contiguous" is to be construed as meaning that the cells are stacked "in series", coupled with the aspect that there is no space between the cells. In Figure 3, the two cells 40, 41 are illustrated as being in the said "contiguous" relationship.

## Claims

1. Shuttering device, which is electronically operable between a clear-viewing condition, in which the passage of visual information through the device to a person's eye is allowed, and a non-viewing condition, in which the passage of visual information through the device to the person's eye is blocked;

wherein the shuttering device comprises a cell, which is mounted in a frame so as to be located directly between the eye of the person and a visual image;

wherein the cell comprises two glass plates and a thin layer of liquid crystal sandwiched between the two glass plates;

wherein the cell also comprises a means for applying an electrical field of an intensity greater than a critical value, across the thickness of the layer of liquid crystal, characterised in that the liquid crystal material is of the kind that undergoes the cholesteric-nematic phase change effect;

in that by application of an electrical field of an intensity greater than the critical value, the liquid is rendered transparent, and the device thereby enters the said clear-viewing condition;

and in that, by reduction of the field below the critical value, the liquid crystal is made to acquire a light scattering texture, which blanks the visual information without rendering the field of view dark, and the device thereby enters the said non-viewing condition.

2. The device of claim 1, wherein two such cells are mounted in the frame, the cells being located respectively directly in front of the left and right eyes of the person.

3. The device of claim 1, wherein two such cells are mounted in series one behind the other in front of the eye.

4. The device of claim 3, wherein the two cells are placed directly together with no intervening space.

5. The device of claim 1, wherein the glass plates have respective coatings of transparent electrically conductive material on the side adjacent to the liquid crystal;

and wherein the said electric field is imposed by applying the voltage to the coatings.

6. The device of claim 5, wherein the electrode coatings on one or both of the parallel plates in each cell are subdivided into segments;

whereby each segment is adapted to be connected to a voltage source;

and whereby means are provided, through direct addressing or multiplexing, of switching sections of each cell between the transparent and scattered states.

7. The device of claim 1, wherein the electric field imposed is initially considerably greater than the critical field necessary for changing the phase of the liquid crystal from scattering to transparent and after the transition said electric field is then reduced to a level which is closer to the critical field value and sufficiently above said field value to maintain the transparent phase.

8. The device of claim 2, wherein the cells are arranged to alternate in sequence each between the clear viewing condition and the non-viewing condition, the arrangement being such that when either of the cells is in the clear viewing condition the other cell is in the non-viewing condition.

9. Stroboscope comprising the device of claim 1, wherein the cells are switched to the transparent state for short periods of time in synchrony with the recurrence of phenomena to be observed.

10. Tachistoscope comprising the device of claim 1, wherein visual information is presented to the eye of an experimental subject in a controlled fashion and for short periods of time.

11. Stereoscope viewer comprising the device of claim 8, wherein successively alternating and appropriately differing images are presented on a suitable display device;

wherein each alternating image is intended for alternating presentation to only one of the observer's eyes, as either a left-eye image or a right-eye image;

wherein the two cells are synchronously switched such that the left eye of the observer receives only left-eye image information and the right eye of the observer receives only right-eye image information;

and wherein said display images are alternated at a sufficiently rapid rate to cause the observer to perceive a continuous three dimensional display image, with minimum flicker and no distortion of display image colour content.

12. The stereoscope viewer of claim 11, wherein said display images are generated by a raster scanning device;

and wherein said left-eye and right-eye images correspond to alternating complete raster scanning frames.

13. The stereoscope viewer of claim 12, wherein the raster scanning device has a faster than normal frame frequency.

14. The stereoscope viewer of claim 11, wherein said display images are generated by a raster scanning device;

whereby said left-eye and right-eye images correspond to alternating rational fractions of complete raster scanning frames.

15. The stereoscope viewer of claim 11, wherein said display images are generated by means of the serial generation of individual components of said images.

16. The stereoscope viewer of claim 15, wherein said components are determined by a digital computing apparatus.

17. The stereoscope viewer of claim 11, wherein said display images are generated by a continuous stroke writing device;

and wherein image content is continuously determined by an analog computing or measuring apparatus.

18. The stereoscope viewer of claim 11, wherein said display images are spatial reproductions or projections of said image information.

19. The device of claim 1, wherein the frame is a spectacle frame, and is suitable for wearing on the face of the person.

**Patentansprüche**

1. Verschlussvorrichtung, die elektronisch zwischen zwei Zuständen bedienbar ist, wovon einer der Klarsichtzustand ist, in welchem Zustand der Durchgang der visuellen Informationen durch den Apparat bis zur Auge einer Person erlaubt wird, und der andere ein Sperrzustand ist, in welchem der Durchgang der visuellen Informationen durch die Vorrichtung bis zum Auge der Person versperrt wird;

dadurch gekennzeichnet, dass die Verschlussvorrichtung aus einer Zelle besteht, welche Zelle in einem Gestell montiert wird, auf solche Weise um gerade zwischen dem Auge der Person und einem visuellen Bild zu liegen;

dadurch gekennzeichnet, dass die Zelle aus zwei parallel zueinander angeordneten Glasplatten und einer dünnen Schicht einer Mischung des Flüssigkristalls besteht, wobei die Mischung in dem Raum zwischen den Platten angeordnet wird;

dadurch gekennzeichnet, dass die Zelle auch ein Mittel dazu darstellt, um ein elektrisches Feld über der Dicke der Schicht der Mischung des Flüssigkristalls anzulegen, wobei die Feldstärke grösser als eine kritische Feldstärkengrösse ist;

dadurch gekennzeichnet, dass die Mischung des Flüssigkristalls von der Sorte des flüssigkristallinen Materials ist, die den cholesterischnematischen Phasenübergang durchmacht;

dadurch gekennzeichnet, dass die Mischung des Flüssigkristalls, bei dem Anlegen eines elektrischen Feldes, derer Stärke grösser als die kritische Feldstärkengrösse ist, durchsichtig wird, und wobei die Vorrichtung dadurch im vorerwähnten Klarsichtzustand eintritt;

und dadurch gekennzeichnet, dass die Mischung des Flüssigkristalls, bei dem Vermindern des elektrischen Feldes unter der kritischen Feldstärkengrösse, eine lichtstreuende Textur bekommt, welche Textur die visuellen Informationen versperrt, ohne das Gesichtsfeld zu verdunkeln, und wobei die Vorrichtung dadurch im vorerwähnten Sperrzustand eintritt.

2. Die Vorrichtung nach Anspruch 1, dadurch gekennzeichnet, dass zwei solche Zellen in dem Gestell montiert werden, auf eine Weise um gerade vor dem linken Auge beziehungsweise dem rechten Auge der Person zu liegen.

3. Die Vorrichtung nach Anspruch 1, dadurch gekennzeichnet, dass zwei solche Zellen in einer Serie, die eine hinter der anderen vor dem Auge, montiert werden.

4. Die Vorrichtung nach Anspruch 3, dadurch gekennzeichnet, dass die zwei Zellen direkt zusammen gebaut werden, ohne dazwischenliegenden Raum.

5. Die Vorrichtung nach Anspruch 1, dadurch gekennzeichnet, dass die Glasplatten, mit einer Schicht transparenten Elektrodenmaterials auf ihren Kontaktoberflächen neben der Mischung des Flüssigkristalls, versehen sind;

und dadurch gekennzeichnet, dass das vorerwähnte elektrische Feld, mittels die Steuerspannung zwischen den Elektrodenschichten, angelegt wird.

6. Die Vorrichtung nach Anspruch 5, dadurch gekennzeichnet, dass die Elektrodenschichten, auf einer oder auf beide parallel zueinander angeordneten Platten jeder Zelle, in Segmente unterteilt werden;

dadurch gekennzeichnet, dass jedes Segment an einer Spannungsquelle angeschlossen wird;

und daudrch gekennzeichnet, dass ein Mittel verschafft wird um, durch direkte Anschlüsse oder durch mehrfache Anschlüsse, Teile jeder Zelle zwischen den durchsichtigen und den lichtstreuenden Zuständen umzuschalten.

7. Die Vorrichtung nach Anspruch 1, dadurch gekennzeichnet, dass das angelegte elektrische Feld anfänglich ansehnlich grösser ist als die kritische Feldstärkengrösse, die notwendig ist, um die Phase der Flüssigkristalle von lichtstreuend bis durchsichtig zu verändern,

und weiter dadurch gekennzeichnet, dass nach dem Phasenübergang das vorerwähnte elektrische Feld bis zu einem neuen Niveau vermindert wird, welches Niveau dichter bei der kritischen Feldstärkengrösse liegt, aber ausreichend stärker als vorerwähnte Feldstärkengrösse ist, um die durchsichtige Phase aufrecht zu erhalten.

8. Die Vorrichtung nach Anspruch 2, dadurch gekennzeichnet, dass die Zellen so eingerichtet sind, dass sie aufeinanderfolgend zwischen dem Klarsichtzustand und dem Sperrzustand wechseln, und die Einrichtung ist derart, dass so bald eine der Zellen im Klarsichtzustand ist, die andere im Sperrzustand ist.

9. Stroboskop bestehend aus der Vorrichtung nach Anspruch 1, dadurch gekennzeichnet, dass die Zellen während kurzer Zeitspannen zum Klarsichtzustand umgeschaltet werden, im Takt mit den zu betrachtenden Erscheinungen.

10. Tachistoskop bestehend aus der Vorrichtung nach Anspruch 1, dadurch gekennzeichnet, dass die visuelle Informationen an jedem Auge der Versuchsperson, auf einer gesteuerten Weise und während kurzer Zeitspannen, dargeboten werden.

11. Stereoskopisches Betrachtungsgerät, bestehend aus der Vorrichtung nach Anspruch 8, dadurch gekennzeichnet, dass aufeinanderfolgend abwechselnde und zueinander passende Bilder auf einem geeigneten Displayapparat geboten werden;

dadurch gekennzeichnet, dass jedes abwechselnde Bild allein an einem der beiden Augen des Beobachters gezeigt wird, entweder als Bild für das linke Auge oder als Bild für das rechte Auge;

dadurch gekennzeichnet, dass die zwei Zellen synchron umgeschaltet werden, auf solche Weise, dass das linke Auge diejenigen visuellen Informationen empfängt, welche allein für das linke Auge beabsichtigt sind, und das rechte Auge diejenigen visuellen Informationen empfängt, welche allein für das rechte Auge beabsichtigt sind;

und dadurch gekennzeichnet, dass die vorerwähnten gezeigten Bilder mit ausreichend hoher Geschwindigkeit abgewechselt werden, um dem Beobachter ein ununterbrochenes dreidimensionales Bild wahrnehmen zu lassen, und das mit minimalem Aufflackern und ohne Verzerrung des Farbengehalts.

12. Das stereoskopische Betrachtungsgerät, nach Anspruch 11, dadurch gekennzeichnet, dass die vorerwähnten Bilder mittels eines Rasterabtastapparates erzeugt werden;

und dadurch gekennzeichnet, dass die vorerwähnten Bilder für das linke Auge und für das rechte Auge mit abwechselnden vollständigen Rasterbildfeldern übereinstimmen.

13. Das stereoskopische Betrachtungsgerät, nach Anspruch 12, dadurch gekennzeichnet, dass der Rasterabtastapparat eine Bildfeldgeschwindigkeit hat, die grösser ist als die gewöhnliche Bildfeldgeschwindigkeit.

14. Das stereoskopische Betrachtungsgerät, nach Anspruch 11, dadurch gekennzeichnet, dass die vorerwähnten Bilder mittels eines Rasterabtastapparates erzeugt werden;

wobei die vorerwähnten Bilder für das linke Auge und für das rechte Auge mit abwechselnden rationalen Brüchen des vollständigen Rasterbildfeldes übereinstimmen.

15. Das stereoskopische Betrachtungsgerät, nach Anspruch 11, dadurch gekennzeichnet, dass die vorerwähnten Bilder, fortlaufend aus Einzelkomponenten erzeugt werden.

16. Das stereoskopische Betrachtungsgerät, nach Anspruch 15, dadurch gekennzeichnet, dass die vorerwähnten Einzelkomponenten durch einem Digitalrechner erzeugt werden.

17. Das stereoskopische Betrachtungsgerät, nach Anspruch 11, dadurch gekennzeichnet, dass die vorerwähnten Bilder mittels eines Schreibers erzeugt werden;

und dadurch gekennzeichnet, dass der Bildgehalt durchlaufend mittels eines Analogrechners oder eines Messapparates erzeugt wird.

18. Das stereoskopische Betrachtungsgerät, nach Anspruch 11, dadurch gekennzeichnet, dass die vorerwähnten Bilder räumliche Wiedergaben sind oder Abbildung der vorerwähnten Bildinformationen.

19. Die Vorrichtung nach Anspruch 1, dadurch gekennzeichnet, dass das Gestell ein Brillengestell ist, und geeignet ist um auf dem Gesicht der Person getragen zu worden.

**Revendications**

1. Appareil d'obturation tel qu'au moyen des commandes électroniques est capable de changer entre un état de vision claire, dans lequel le passage des renseignements visuels à travers l'appareil est permis, et un état de vision obstruée, dans lequel le passage des renseignements visuels est bloqué;

caractérisé en ce que l'appareil d'obturation se compose d'une cellule, montée dans une monture de telle sorte que la cellule est mise en place directement entre l'oeil d'une personne et une image visuelle;

caractérisé en ce que la cellule contient un sandwich consistant en deux lames de verre et une couche mince d'une solution de cristaux liquides déposée entre les deux lames de verre;

caractérisé en ce que la cellule contient un moyen pour appliquer un champ électrique, avec une intensité plus haute qu'un niveau critique, au travers de l'épaisseur de la couche des cristaux liquides;

caractérisé en ce que la matière des cristaux liquides appartient à l'espèce desquelles cristaux liquides qui subissent l'effet de changement de phase cholestérique-nématique;

caractérisé en ce que sur l'application d'un champ électrique, avec une intensité plus haute qu'une niveau critique, la solution des cristaux liquides se rende tansparente, et l'appareil entre dans l'état s'appelant l'étant de vision claire;

et caractérisé en ce que sur la diminution du champ électrique au-dessous du niveau critique la solution des cristaux liquides acquiert une texture de diffusion de lumière, qui bloque les renseignements visuels sans obscurcir le champ visuel, et l'appareil entre dans l'état s'appelant l'état de vision obstruée.

2. L'appareil selon la revendication 1, caractérisé en ce que deux de telles cellules sont montées dans la monture, telles cellules mises en place respectivement, directement devant l'eoil gauche et l'oeil droit de la personne.

3. L'appareil selon la revendication 1, caractérisé en ce que deux de telles cellules sont montées en série, l'une derrière l'autre, devant l'oeil.

4. L'appareil selon la revendication 3, caractérisé en ce que les deux cellules sont placées directement ensemble dans espace intermédière.

5. L'appareil selon la revendication 1, caractérisé en ce que sur le côté attenant à la solution de cristaux liquides de chaque lame de verre est déposée une couche d'une matière transparente, conductrice d'électricité;

et caractérisé en ce que le champ électrique est imposé par l'application de la tension électrique entre les deux couches.

6. L'appareil selon la revendication 5, caractérisé en ce que les électrodes couchées sur l'une ou sur les deux lames parallèles de verre de chaque cellule sont subdivisées en segments;

caractérisé en ce que chaque segment est adapté pour être relié à une source de tension électrique;

et caractérisé en ce que les moyens sont fournis, par l'adressage direct ou par la méthode en multiplex, pour commuter les segments de chaque cellule entre l'état transparent et l'état de diffusion de lumière.

7. L'appareil selon la revendication 1, caractérisé en ce que le champ électrique appliqué est au commencement considérablement plus grand que le champ critique nécessaire pour changer la phase de la solution de cristaux liquides de l'état de diffusion de lumière jusqu'à l'état transparent, et après la transition ce champ électrique est ensuite diminué à un niveau qui est plus proche du niveau du champ électrique critique mais suffisamment au-dessus de ce niveau de champ électrique critique pour maintenir la phase à l'état transparent.

8. L'appareil selon la revendication 2, caractérisé en ce que les cellules sont disposées à se succéder tour à tour, chacune entre l'état de vision claire et l'état de vision obstruée, la disposition de telle façon que chaque fois que l'une des cellules est à l'état de vision claire l'autre cellule est à l'état de vision obstruée.

9. Stroboscope se composant de l'appareil selon la revendication 1, caractérisé en ce que les cellules sont commutées à l'état transparent pendant des périodes courtes de temps en synchronisation avec la récurrence des phénomènes qui doivent être observés.

10. Tachistoscope se composant de l'appareil selon la revendication 1, caractérisé en ce que les renseignements visuels sont présentés à l'oeil d'un sujet d'expérience d'une façon réglementé et pendant des périodes courtes de temps.

11. Visionneuse stéréoscopique se composant de l'appareil selon la revendication 8, caractérisée en ce que des images se succédantes tour à tour et convenablement différentes sont présentées sur un appareil convenable d'étalage;

caractérisée en ce que chaque image se succédant est destinée à la présentation à seulement un des yeux de l'observateur, soit comme image pour l'eoil gauche, soit comme image pour l'oeil droit;

caractérisée en ce que les deux cellules sont commutées en synchronisation, de telle façon que l'oeil gauche de l'observateur ne reçoive que les renseignements visuels destinés à l'oeil gauche et que l'oeil droit de l'observateur ne reçoive que les renseignements visuels destinés à l'oeil droit;

et caractérisée en ce que telles images d'étalage se succédent avec une rapidité suffisante pour mettre l'observateur en état de percevoir une image continue à trois dimensions, avec un minimum de scintillement et sans déformation du contenu chromatique de l'image d'étalage.

12. La visionneuse stéréoscopique selon la revendication 11, caractérisée en ce que telles images d'étalage sont produites par un appareil de balayage de trames;

et caractérisée en ce que telles images destinées à l'oeil gauche et telles destinées à l'oeil droit correspondent aux trames completes se succédantes produites par tel appareil de balayage.

13. La visionneuse stéréoscopique selon la revendication 12, caractérisée en ce que l'appareil de balayage de trames est capable de produire une fréquence de génération de trames plus rapide que la fréquence normale.

14. La visionneuse stéréoscopique selon la revendication 11, caractérisée en ce que telles images d'étalage sont produites par un appareil de balayage de trames;

et caractérisée en ce que telles images destinées à l'oeil gauche et telles images destinées à l'oeil droit correspondent aux fractions rationnelles se succédants de trames completes produites par tel appareil de balayage.

15. La visionneuse stéréoscopique selon la revendication 11, caractérisée en ce que telles images d'étalage sont produites au moyen de la génération en série des parties composantes individuelles de telles images.

16. La visionneuse stéréoscopique selon la revendication 15, caractérisée en ce que telles parties composantes sont déterminées au moyen d'un appareil à calcul numérique.

17. La visionneuse stéréoscopique selon la revendication 11, caractérisée en ce que telles images d'étalage sont produites au moyen d'un appareil capable de dessiner des lignes continues;

et caractérisée en ce que le contenu de telles images est déterminé continûment au moyen d'un appareil à celcul analogique ou à mesure analogique.

18. La visionneuse stéréoscopique selon la revendication 11, caractérisée en ce que telles images d'étalage sont des reproductions spatialles ou des projections des renseignements de telles images.

19. L'appareil selon la revendication 1, caractérisé en ce que la monture est une monture à lunettes, et est convenable à porter sur le visage de la personne.

0 136 085

FIG 1

GATING
CIRCUIT

SIGNAL
SOURCE

VOLTAGE
SOURCE

FIG 2

FIG 3